(19) Europäisches Patentamt
European Patent Office
Office européen des brevets

(11) Publication number: 0 066 872 A1

(12) # EUROPEAN PATENT APPLICATION

(21) Application number: 82104961.6

(51) Int. Cl.³: A 01 N 35/10

(22) Date of filing: 07.06.82

(30) Priority: 08.06.81 US 271225
08.06.81 US 271282

(43) Date of publication of application: 15.12.82 Bulletin 82/50

(84) Designated Contracting States: AT BE CH DE FR GB IT LI LU NL SE

(71) Applicant: Kalo Laboratories, Inc., 10236 Bunker Ridge Road, Kansas City Missouri 64137 (US)

(72) Inventor: Emerson, Carl D., 4604 Northeast 49th Street, Kansas City Missouri 64119 (US)
Inventor: Rhode, Norman G., 614 Comanche Circle, Alva Oklahoma 73717 (US)
Inventor: Bellet, Eugene M., 16160 Nall, Stilwell Kansas 66085 (US)

(74) Representative: Abitz, Walter, Dr.-Ing. et al, Abitz, Morf, Gritschneder, Freiherr von Wittgenstein Postfach 86 01 09, D-8000 München 86 (DE)

(54) **Plant growth regulating composition and method of regulating the growth of a plant.**

(57) Compositions and methods for regulating plant growth are disclosed. The compositions comprise a compound of the formula

$$R-CH=N-R'$$

wherein R is selected from the group consisting of phenyl, phenylethenyl and alkyl having one to twelve carbons and R' is selected from the group consisting of phenyl and alkyl having one to twelve carbons in combination with an inert carrier. Dimers and salts of the above compounds are also disclosed. The compounds, preferably in an aqueous carrier, are applied to oil, fiber, root or grain crops in amounts ranging from 0.01 to 0.5 pounds of active ingredient per acre. Application may be effected by soil treatment either prior to or after planting or by treatment of the emergent plant. Application of the compositions generally results in increased plant height, plant weight and/or yield.

EP 0 066 872 A1

# PLANT GROWTH REGULATING COMPOSITION AND METHOD OF REGULATING THE GROWTH OF A PLANT

## Summary of the Invention

This invention relates to plant growth regulating compositions and methods for their use. The compositions comprise an active ingredient in an inert agricultural carrier, said active ingredient having the formula:

$$R - CH = N - R'$$

wherein R is phenyl, phenylethenyl, or $C_1$ to $C_{12}$ alkyl and R' is phenyl or $C_1$ to $C_{12}$ alkyl. Some compositions of the above formula are relatively unstable and further react upon standing to form dimers of the formula:

```
R - N = CH - CH - R"
             |
      R - NH - CH - CH2 - R"
```

wherein R" is $C_1$ to $C_{10}$ alkyl. Certain of these materials, particularly those bearing anilino groups, may further react upon heating to form $RNH_2$ and a compound of the formula $R - N = CH - CR" = C - CH_2 - R"$ or upon hydration a compound of the formula:

```
R - N = CH - CHR" - C - CH2 - R"
                    |
                    OH
```

These further reaction products are within the scope of the invention.

When an effective amount of the compositions is applied to root, fiber, oil or grain crops, particularly those planted in sandy organic soils, increased height, weight and/or yield is commonly observed. Effective amounts of the active ingredients range from 0.01 to 0.5 pounds per acre. The compounds favorably affect plant growth so as to permit earlier planting while temperature conditions remain cool.

The compositions preferably contain compounds selected from the group consisting of N-(1-methylpropyl)benzylideneimine,

N-dodecylbenzylideneimine, N-phenylbenzylideneimine, N-t-butylcinnamylideneimine and N-phenylpropylideneimine. The compositions may contain additional ingredients including, but not limited to, certain phenols, aldehydes and fertilizers.

## Detailed Description of the Invention

The present invention provides plant growth regulating compositions and methods for their use. The compositions contain various Schiff bases as active ingredients for enhancing plant growth. The active ingredients are dissolved, dispersed or otherwise combined with an inert carrier, suitable for agricultural use, and are applied to the soil or a plant in effective amounts, generally ranging from 0.01 to 0.5 pounds per acre.

More specifically, the active compounds of the invention are Schiff bases having the formula

$$R - CH = N - R' \qquad I$$

wherein R is phenyl, phenylethenyl or an alkyl group having one to twelve carbons and R' is phenyl or an alkyl group having one to twelve carbons. Thus, for example, R may be methyl, ethyl, N-propyl, i-propyl, 2-methylpropyl, n-butyl, dodecyl, phenyl or 2-phenylethenyl and R' may be methyl, ethyl, n-propyl, i-propyl, 1-methylpropyl, 2-methylpropyl, n-butyl, t-butyl or phenyl. Preferred compounds include N-(1-methylpropyl)benzylideneimine, N-dodecylbenzylideneimine, N-phenylbenzylideneimine, N-t-butylcinnamylideneimine and N-phenylpropylideneimine.

Included within the above formula are certain materials which upon standing at ambient conditions or upon slight heating react to form dimers of the formula:

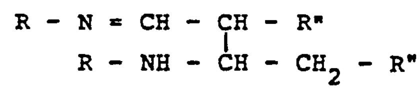

wherein R" is $C_1$ to $C_{10}$ alkyl. Heating may cause amine elimination and hydration of the resulting alkene double bond. These reactions may proceed as follows:

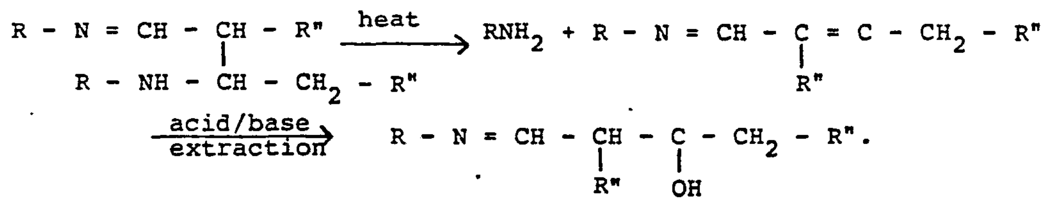


For example, N - phenylpropylidineimine, wherein R" is methyl and R is phenyl, reacts according to the above sequence.

The invention includes Schiff bases which are produced via the above reactions, particularly those which are produced due to instability of the products described by the above formula I. The invention thus encompasses dimers of unstable materials such as N - phenylpropylidineimine. References herein to such unstable Schiff base monomers include not only the monomers but also further Schiff base products such as dimers and their deamination and hydration products which spontaneously form under normal conditions of use. It is also to be understood that salts of the compounds above described are within the scope of the invention.

The active compounds may be prepared by reacting an aldehyde of the formula R - CHO, wherein R is as defined above, with a primary amine of the formula $H_2N - R'$, wherein R' is as defined above. Such reaction proceeds as follows:

$$R - CHO + H_2N - R' \longrightarrow R - CH = N - R' + H_2O$$

The reaction is generally effected in an inert solvent for both reactants at the reflux temperature of the solvent, preferably employing equimolar portions of the aldehyde and amine to

minimize purification problems.

Preferably the solvent employed during the reaction is a solvent for the product Schiff base as well as the reactants. Further it is desirable to employ solvents having boiling points in the range below about 100 C. Suitable solvents include aliphatic ketones or alcohols. Aromatic solvents can be employed but can be expected to result in precipitation of the product on cooling. Among the preferred solvents, in descending order of preference, are acetone, 2-butanone, 2-butanol and ethanol.

As noted above, the reaction is generally effected at the reflux temperature of the solvent employed. The reflux is continued until the reaction is complete. Completion of the reaction can be detected by IR monitoring the carbonyl peak. Typically no more than about 6-8 hours are required to complete the reaction.

The active ingredients are admixed with an inert carrier to form the compositions of the invention. For purposes of the present application the term inert carrier refers to carriers which are not chemically reactive with the active ingredient and which are suitable for use in agriculture. The most preferred carrier is water. Acetone and urea-ammonium nitrate solutions may also be employed. The carrier is employed in an amount which will permit application of the active compound in an effective amount. Thus the carrier amount is a function of manageable application rates.

The active compound is preferably uniformly dispersed, suspended or dissolved in the carrier to form a homogeneous mixture. To accomplish uniform suspension in an aqueous carrier, the active compound may be dissolved in a solvent

which is completely soluble or miscible in water prior to addition to the aqeuous carrier. A preferred solvent for this purpose is aliphatic ether alcohol, particularly that sold as Dowanol EB (Dow Chemical Corp.). The amount of such solvent is a function of the solubility of the active compound therein; that is, sufficient solvent must be employed to achieve complete dissolution of the active ingredient.

The compositions may additionally contain an emulsifier in amounts sufficient to maintain or stabilize the active compound in the aqueous carrier. An example of such an emulsifier is Pluronic P-104, (BASF Wyandotte).

Other ingredients may be present in the compositions of the invention provided they are chemically inert relative to the active compound. For example, aldehydes and acetylacetone may be present as additional solvents and possibly as aids to penetration of the active ingredient. Phenols, including alkyl substituted phenols, are preferred additives for purposes of the present invention. For example, compositions of the invention may include 4 - nonyl phenol in an equimolar amount relative to the active ingredients of the invention. The compositions may also contain fertilizers, as when they are applied in conjunction with aqueous urea-ammonium nitrate solutions. At higher rates of fertilizer application, however, the positive effects of the compositions of the invention may be masked.

Examples of compositions useful in the practice of the present invention are those containing 30-90 weight percent Dowanol EB, 5-60 weight percent Pluronic P-104, 1-10 weight percent active ingredient and 0-10 weight percent cinnamaldehyde or acetylacetone in an aqueous carrier. Of

the formulations tested, those preferred contained 38.05 weight percent Dowanol EB, 57.58 weight percent Pluronic P-104 and 4.38 weight percent active ingredient or 36.45 weight percent Dowanol EB, 55.16 weight percent Pluronic P-104, 4.19 weight percent cinnamaldehyde or acetylacetone and 4.19 weight percent active ingredient suspended in an aqueous carrier. Overall, preferred compositions contain as little emulsifier as necessary to maintain or stabilize the active compound in the aqueous carrier. Compositions containing nonyl aldehyde or α-methyl cinnamaldehyde have generally not been found particularly effective in the practice of the present invention.

The compositions of the invention generally stimulate plant growth. For example, the compositions enhance plant size, yield, root and/or plant strength or hardiness when applied at rates of 0.01 to 0.5 pounds active ingredient per acre. At higher rates of application no further substantial increase in plant growth is generally observed and in some cases higher rates adversely affected plant growth. Lower rates of application, i.e. about 0.01 to about 0.2 pounds per acre, are most preferred.

Beneficial growth effects may be observed both when the compositions are applied to the soil, either before or after planting, and when they are applied to the emergent plant. For purposes of the present invention, treatment of a plant with the compositions of the invention includes direct application to the emergent plant, as well as application to or incorporation in the soil prior to emergence and/or planting. For purposes of this application, treatments involving direct application to seed are excluded from the term plant treatment. Direct seed treatment is not an acceptable mode of application

since such application can adversely affect seed germination. Soil application is not a direct seed treatment of the type herein contemplated.

Soil application of the compositions of the invention permits planting of crops while conditions are still relatively cold. By incorporating the compositions into the soil before or at the time of planting, plants having root systems and strength sufficient to survive relatively harsh temperature conditions early in the planting season are produced. The compositions thus effectively extend the growing season.

When the compositions of the invention are used to treat plants grown in organic soils having a high sand content growth is most favorably enhanced. On the other hand, planting in clay soils results in less favorable growth effects.

Among the plants whose growth is positively affected by the compositions of the invention are grain crops, specifically milo sweet and field corn, fiber crops, specifically cotton, oil crops, specifically soybeans or sunflowers, and root crops, specifically sugar beets. Effective modes and rates of application vary from crop to crop. General guidelines are set forth below.

In the case of field corn, incorporation of the compositions of the invention into the soil prior to planting or application to the soil after planting but before emergence at rates of 0.01 to 0.25 pounds active compound per acre results in increased plant height, plant weight and root volume. Application of the compositions after emergence of field corn plants produces a negative effect on growth.

When the compositions are applied to sweet corn at rates of 0.01 to 0.1 pounds active ingredient per acre, an increased height and fruit yield is observed. Such beneficial

effects exist whether the compositions are applied by incorporation into the soil prior to planting, by application to the soil surface after planting or during the early stages of emergence. During the late stages of plant emergence, negative growth effects may occur.

When cotton is treated with compositions of the invention, either by incorporation in or surface application to the soil, at rates of 0.01 to 0.1 pounds active ingredient per acre, an increased yield of cotton fibers is observed. Moreover, such fibers have greater length and strength. Pre-plant incorporation of materials of the invention in sandy soils during the early stages of the cotton growing season at rates of 0.05 to 0.1 pounds per acre has produced significant positive growth effects.

Sugar beets, treated with 0.01 to 0.5 pounds active ingredient per acre exhibit increased yield. Further the sugar beets yield a greater percentage sucrose.

The examples below are illustrative of the invention. In the examples, references to AI mean active ingredient. Numerical values set forth in parentheses are percent change in treated plant relative to control. References in the examples, to N mean nitrogen, while those to N/A mean nitrogen per acre. Where a single asterisk (*) appears adjacent a result, a significant change exists relative to the control at a least significant difference (LSD) of 0.05. Similarly a double asterisk (**) indicates a significant change at LSD .01.

EXAMPLE 1

Active compounds of the invention were prepared in the manner described below. For ease of reference, each compound has been assigned a numeric designation.

0.1 M propionaldehyde (5.8 grams) was dissolved in acetone. The solution was brought to reflux and 0.1 M aniline (9.3 grams) in acetone was added. Refluxing was continued for 6 hours. The cooled acetone solution was mixed with anhydrous $MgSO_4$, filtered and the acetone removed by vacuum stripping. N-Phenylpropylideneimine (dimer) was obtained as a light yellow, crystalline solid, m.p. (103-104°C). This material is Compound 20.

In a similar manner, trans-cinnamaldehyde was reacted with aniline to give N-Phenylcinnamylideneimine as a light yellow, crystalline solid, mp. 48.7 - 49.0° C (Compound 18). Other compounds similarly prepared were N-Methylbenzylideneimine (Compound 1), N-Ethylbenzylideneimine (Compound 2), N-Propylbenzylideneimine (Compound 3), N-(1-Methylethyl) benzylideneimine (Compound 4), N-Butylbenzylideneimine (Compound 5), N-(1-Methylpropyl)benzylideneimine (Compound 6), N-(2-Methylpropyl)-benzylideneimine (Compound 7), N-t-Butylbenzylideneimine (Compound 8), N-Dodecylbenzylideneimine (Compound 9), N-Phenylbenzylideneimine (Compound 10), N-Methylcinnamylideneimine (Compound 11), N-Ethylcinnamylideneimine (Compound 12), N-Propylcinnamylideneimine (Compound 13), N-Butylcinnamylideneimine (Compound 14), N-(1-methylpropyl)cinnamylideneimine (Compound 15), N-t-Butylcinnamylideneimine (Compound 16), N-Dodecylcinnamylideneimine (Compound 17), N-Phenylethylideneimine (Compound 19), N-Phenylbutylideneimine (Compound 21), N-Phenyl-2-methylpropylideneimine (Compound 22), N-Phenylpentylideneimine (Compound 23), N-Phenyl-3-methylbutylideneimine (Compound 24), and N-Phenyldodecylideneimine (Compound 25).

In the examples below, various formulations of the compositions of the invention were tested. These formulations

are identified in Table 1.

TABLE 1

| Formulation | Dowanol EB Weight Percent | Pluronic P-104 Weight Percent | Active Ingredient Weight Percent | Other Ingredient(s) Weight Percent |
|---|---|---|---|---|
| A | 38.05 | 57.58 | 4.38 | -- |
| B | 36.45% | 55.16 | 4.19 | 4.19 Cinnamaldehyde |
| C | 36.45 | 55.16 | 4.19 | 4.19 Crotonaldehyde |
| D | 36.45 | 55.16 | 4.19 | 4.19 Citronellal |
| E | 34.99% | 52.94 | 4.02 | 4.02 Cinnamaldehyde<br>4.02 Crotonaldehyde |
| F | 36.45% | 55.16 | 4.19 | 4.19 Anisaldehyde |
| G | 36.45 | 55.16 | 4.19 | 4.19 Salicylaldehyde |
| H | 36.45 | 55.16 | 4.19 | 4.19 Acetylacetone |

EXAMPLE 2

Compositions were formulated and greenhouse tested at a rate of 0.03 pounds active ingredient per acre on field corn and 0.015 AI per acre on cotton. The compositions were applied both by incorporation in the upper 4" of sandy loam soil prior to planting and by application to the surface of the same soil. Incorporation refers to incorporation of the experimental chemical into the soil followed by immediate planting. Surface application was effected by applying the experimental chemical to the soil surface, watering and then planting the seeds one week later. Ten inch high nursery pots were used in the test. The formulations were applied in a 28% Urea-Ammonium Nitrate solution (UAN) carrier. The amount of UAN solution was adjusted to furnish the equivalent of 100 pounds nitrate per acre for field corn and 50 pounds nitrogen per acre for cotton. Growth responses were measured after six weeks. Plant height was measured from the soil level to the top of the tallest leaf in corn and to the average height in cotton. Green weight was measured by weighing the portion of the plant above the soil level. The results are set forth in Tables 2-3.

TABLE 2 - CORN

| COMPOUND (FORMULATION) | | PRE-PLANT INCORPORATED HEIGHT (INCHES) | PRE-PLANT INCORPORATED WEIGHT (GRAMS) | SURFACE APPLICATION HEIGHT (INCHES) | SURFACE APPLICATION WEIGHT (GRAMS) |
|---|---|---|---|---|---|
| 6 | (A) | 30.5 (98) | 18.5 (108) | 33.0 (106) | 27.5 (149) |
| | (B) | 39.5 (127) | 33.5 (196) | 39.3 (126) | 24.3 (132) |
| 8 | (A) | 31.0 (100) | 11.6 (68) | 30.3 (97) | 11.9 (65) |
| 9 | (A) | 27.3 (88) | 11.3 (66) | 31.3 (100) | 13.3 (72) |
| | (B) | 45.0 (145) | 70.0 (409) | 40.6 (130) | 45.3 (246) |
| | (C) | 43.0 (139) | 55.0 (322) | 37.0 (119) | 35.0 (190) |
| 11 | (A) | 31.6 (102) | 20.6 (120) | 32.0 (103) | 35.0 (190) |
| | (B) | 34.5 (111) | 18.0 (105) | 30.0 (96) | 13.5 (73) |
| | (D) | 29.5 (95) | 15.5 (91) | 22.5 (72) | 9.5 (52) |
| | (E) | 26.6 (86) | 11.6 (68) | 34.0 (109) | 22.0 (120) |
| 12 | (A) | 25.3 (82) | 9.0 (53) | 27.0 (87) | 10.3 (56) |
| | (B) | 23.6 (76) | 6.6 (39) | 29.0 (93) | 12.3 (67) |
| | (G) | 36.6 (118) | 18.3 (107) | 30.5 (98) | 8.0 (43) |
| | (H) | 34.6 (112) | 17.0 (99) | 30.3 (97) | 13.6 (74) |
| 13 | (A) | 38.6 (125) | 25.6 (150) | 40.6 (130) | 19.3 (105) |
| | (B) | 37.6 (121) | 16.0 (94) | 34.0 (109) | 13.6 (74) |
| | (D) | 28.6 (92) | 10.3 (60) | 27.0 (87) | 18.0 (98) |
| | (E) | 39.6 (128) | 41.6 (243) | 44.0 (141) | 41.0 (223) |

TABLE 2 - Continued

| COMPOUND (FORMULATION) | PRE-PLANT INCORPORATED HEIGHT (INCHES) | PRE-PLANT INCORPORATED WEIGHT (GRAMS) | SURFACE APPLICATION HEIGHT (INCHES) | SURFACE APPLICATION WEIGHT (GRAMS) |
|---|---|---|---|---|
| 14 (A) | 32.6 (105) | 41.6 (243) | 33.0 (106) | 40.0 (217) |
| (B) | 37.3 (120) | 18.0 (105) | 45.6 (146) | 29.3 (159) |
| (D) | 49.0 (158) | 39.0 (228) | 37.3 (120) | 13.3 (72) |
| (E) | 32.0 (103) | 18.0 (105) | 24.3 (78) | 7.0 (38) |
| 15 (A) | 33.3 (107) | 23.0 (135) | 47.3 (152) | 70.6 (384) |
| (B) | 25.0 (81) | 53.0 (310) | 37.3 (120) | 23.6 (128) |
| (F) | 32.0 (103) | 16.0 (94) | 36.0 (115) | 27.6 (150) |
| (E) | 39.3 (127) | 27.3 (160) | 38.6 (124) | 26.3 (143) |
| 16 (A) | 49.5 (160) | 88.5 (518) | 34.6 (111) | 32.6 (177) |
| (B) | 37.5 (121) | 54.0 (316) | 37.3 (120) | 28.3 (154) |
| (G) | 36.0 (116) | 17.0 (99) | 28.3 (91) | 35.3 (192) |
| (H) | 38.0 (123) | 31.3 (183) | 44.3 (142) | 39.6 (215) |
| 17 (A) | - | - | - | - |
| (B) | 34.6 (112) | 24.0 (140) | 38.3 (123) | 37.6 (204) |
| (C) | 32.6 (105) | 21.0 (123) | 39.5 (127) | 41.0 (223) |
| NO TREATMENT | 30.9 | 17.7 | 28.1 | 15.5 |
| CONTROL (100# N/A) | 31.0 | 17.1 | 31.2 | 18.4 |

TABLE 3 - COTTON

| COMPOUND (FORMULATION) | | PRE-PLANT INCORPORATED HEIGHT (INCHES) | PRE-PLANT INCORPORATED WEIGHT (GRAMS) | SURFACE APPLICATION HEIGHT (INCHES) | SURFACE APPLICATION WEIGHT (GRAMS) |
|---|---|---|---|---|---|
| 6 | (A) | 10.5 | - | 7.50 | - |
| | (B) | - | - | 8.33 | 3.00 |
| | (J) | 9.0 | - | 6.33 | 2.00 |
| | (K) | 10.0 | - | 8.67 | 3.67 |
| 9 | (A) | 8.3 | 4.7 | 8.00 | 3.33 |
| | (B) | 9.7 | 4.7 | 12.00 | 7.33 |
| | (C) | 11.7 | 7.7 | 8.67 | 4.33 |
| 11 | (A) | 8.0 | 4.0 | 8.33 | 4.33 |
| | (B) | 8.7 | 4.7 | 8.50 | 3.50 |
| | (D) | 8.3 | 3.3 | 8.00 | 4.00 |
| | (E) | 6.7 | 3.0 | 6.50 | 2.50 |
| 13 | (A) | 8.3 | - | 9.33 | - |
| | (B) | 8.3 | - | 8.33 | - |
| | (D) | 9.0 | - | 8.00 | - |
| | (E) | 11.0 | - | 10.00 | - |
| 14 | (A) | 6.5 | - | 15.00 | - |
| | (B) | 10.5 | - | 7.67 | - |
| | (D) | 9.0 | - | 8.00 | - |
| | (E) | 7.5 | - | 8.67 | - |

TABLE 3 - Continued

| COMPOUND (FORMULATION) | PRE-PLANT INCORPORATED | | SURFACE APPLICATION | |
|---|---|---|---|---|
| | HEIGHT (INCHES) | WEIGHT (GRAMS) | HEIGHT (INCHES) | WEIGHT (GRAMS) |
| 15 (A) | 10.7 | - | 9.00 | - |
| (B) | - | - | - | - |
| (F) | 8.7 | - | 9.00 | - |
| (E) | 10.0 | - | 9.00 | - |
| 16 (A) | 8.0 | - | 8.00 | - |
| (B) | 9.0 | - | 11.00 | - |
| (G) | 11.0 | - | 9.33 | - |
| (H) | 9.0 | - | 7.33 | - |
| NO TREATMENT | 8.105 | 3.450 | 7.73 | 3.03 |
| CONTROL (50# N/A) | 8.220 | 3.431 | 8.43 | 4.00 |

- 16 -

EXAMPLE 3

The compositions were formulated and tested at rates of 0.015 pounds per acre and 0.03 pounds per acre on field corn using water or 28% UAN as carrier. The amount of UAN solution was adjusted to furnish the equivalent of 50 pounds N per acre. The methods employed in Example 2 were used. Nine plants and controls were treated by each method.

Growth responses were measured after six weeks. Plant height and green weight were measured as in Example 2. The results are set forth in Tables 4 through 6.

TABLE 4

(WATER CARRIER / 0.015 POUNDS AI/A/ CONTROL: NO TREATMENT)

| COMPOUND (FORMULATION) | | PRE-PLANT INCORPORATED HEIGHT (INCHES) RESULT | CONTROL | WEIGHT (GRAMS) RESULT | CONTROL | SURFACE APPLICATION HEIGHT (INCHES) RESULT | CONTROL | WEIGHT (GRAMS) RESULT | CONTROL |
|---|---|---|---|---|---|---|---|---|---|
| 8 | (B) | 20.6 | 13.5 | 4.7 | 1.6 | 17.9 | 13.5 | 3.4 | 1.6 |
| | (C) | 23.3 | 14.9 | 5.4 | 1.7 | 17.0 | 14.9 | 2.8 | 1.7 |
| 13 | (E) | 21.7 | 12.2 | 5.8 | 1.8 | 17.9 | 12.2 | 3.9 | 1.8 |
| 14 | (A) | 21.7 | 16.0 | 5.6 | 2.3 | 16.3 | 16.0 | 2.7 | 2.3 |
| 15 | (A) | 21.9 | 16.1 | 4.9 | 2.4 | 17.0 | 16.1 | 2.6 | 2.4 |
| | (B) | 19.2 | 15.7 | 4.4 | 1.7 | 14.0 | 15.7 | 2.6 | 1.7 |
| 16 | (A) | 18.8 | 12.8 | 3.7 | 1.8 | 12.9 | 12.8 | 1.8 | 1.8 |
| | (B) | 20.0 | 12.3 | 4.4 | 1.5 | 15.0 | 12.3 | 2.3 | 1.5 |
| 17 | (C) | 18.2 | 15.7 | 3.8 | 2.0 | 13.7 | 15.7 | 2.4 | 2.0 |

TABLE 5

(28% UAN CARRIER / 0.015 POUNDS AI/A/ CONTROL: 50 POUNDS N/A)

| COMPOUND (FORMULATION) | | PRE-PLANT INCORPORATED HEIGHT (INCHES) RESULT | CONTROL | WEIGHT (GRAMS) RESULT | CONTROL | SURFACE APPLICATION HEIGHT (INCHES) RESULT | CONTROL | WEIGHT (GRAMS) RESULT | CONTROL |
|---|---|---|---|---|---|---|---|---|---|
| 8 | (B) | 22.1 | 15.2 | 5.4 | 2.3 | 22.6 | 20.6 | 4.7 | 4.7 |
| | (C) | 20.2 | 18.5 | 3.2 | 3.5 | 24.0 | 23.2 | 6.0 | 5.7 |
| 13 | (E) | 22.5 | 15.2 | 6.5 | 3.1 | 18.0 | 20.8 | 4.1 | 5.3 |
| 14 | (A) | 20.6 | 15.3 | 5.3 | 2.8 | 21.9 | 20.7 | 5.0 | 5.3 |
| 15 | (A) | 23.6 | 12.2 | 5.3 | 2.9 | 21.3 | 16.3 | 6.6 | 4.8 |
| | (B) | 22.4 | 16.4 | 5.6 | 2.8 | 23.3 | 18.7 | 6.1 | 3.9 |
| 16 | (A) | 18.9 | 15.6 | 4.6 | 2.9 | 20.0 | 18.2 | 4.9 | 4.1 |
| | (B) | 21.1 | 18.7 | 4.6 | 3.3 | 19.6 | 20.1 | 4.1 | 4.3 |
| 17 | (C) | 19.8 | 16.4 | 4.4 | 2.9 | 18.8 | 18.8 | 4.2 | 4.3 |

TABLE 6

(28% UAN CARRIER / 0.03 POUNDS AI/A/ CONTROL: 50 POUNDS N/A)

| COMPOUND (FORMULATION) | PRE-PLANT INCORPORATED HEIGHT (INCHES) RESULT | CONTROL | WEIGHT (GRAMS) RESULT | CONTROL | SURFACE APPLICATION HEIGHT (INCHES) RESULT | CONTROL | WEIGHT (GRAMS) RESULT | CONTROL |
|---|---|---|---|---|---|---|---|---|
| 8 (B) | 20.0 | 15.2 | 4.7 | 2.3 | 20.0 | 20.6 | 4.0 | 4.7 |
| (C) | 20.2 | 18.5 | 3.6 | 3.5 | 18.9 | 23.2 | 3.3 | 5.7 |
| 13 (E) | 17.9 | 15.2 | 4.2 | 3.1 | 15.8 | 20.8 | 3.2 | 5.3 |
| 14 (A) | 18.2 | 15.3 | 4.1 | 2.8 | 18.0 | 20.7 | 4.2 | 5.3 |
| 15 (A) | 18.7 | 12.2 | 4.4 | 2.9 | 20.9 | 16.3 | 5.2 | 4.8 |
| (B) | 19.2 | 16.4 | 3.3 | 2.8 | 17.9 | 18.7 | 2.7 | 3.9 |
| 16 (A) | 17.3 | 15.6 | 3.4 | 2.9 | 17.0 | 18.2 | 3.1 | 4.1 |
| (B) | 19.4 | 18.7 | 4.0 | 3.3 | 16.4 | 20.1 | 2.8 | 4.3 |
| 17 (C) | 17.8 | 16.4 | 3.3 | 2.9 | 18.1 | 18.8 | 2.7 | 4.3 |

EXAMPLE 4

Compound 9 in formulation C was tested at rates of 0.02, 0.04, 0.06 pounds AI per acre using field corn and milo (grain sorghum) as test species. The composition was applied as a pre-plant soil incorporated treatment using either water or 28% UAN solution as carrier. The amount of 28% UAN solution was adjusted to furnish either 75 pounds N per acre or 125 pounds N per acre. The soil was a sandy loam.

Growth responses were measured as in Example 3. The results are set forth in Table 7. The results are questionable in view of the wide disparity in control values.

TABLE 7

| RATE #AI/A | FIELD CORN HEIGHT (INCHES) RESULT | CONTROL | FIELD CORN WEIGHT (GRAMS) RESULT | CONTROL | MILO HEIGHT (INCHES) RESULT | CONTROL | MILO WEIGHT (GRAMS) RESULT | CONTROL |
|---|---|---|---|---|---|---|---|---|
| A. Water Carrier; Control: No treatment | | | | | | | | |
| 0.02 | 23.3 | 35.2 | 51.3 | 114.3 | 16.0 | 15.3 | 16.7 | 20.7 |
| 0.04 | 25.8 | 35.2 | 52.3 | 114.3 | 14.0 | 15.3 | 15.3 | 20.7 |
| 0.06 | 28.0 | 35.2 | 80.0 | 114.3 | 13.0 | 15.3 | 16.0 | 20.7 |
| B. 28% UAN Carrier at 75 Pounds N/A; Control: 75 Pounds N/A | | | | | | | | |
| 0.02 | 42.7 | 43.8 | 152.0 | 157.3 | 27.5 | 31.0 | 54.3 | 60.7 |
| 0.04 | 44.0 | 43.8 | 148.0 | 157.3 | 40.0 | 31.0 | 77.0 | 60.7 |
| 0.06 | 44.0 | 43.8 | 144.7 | 157.3 | 31.7 | 31.0 | 48.3 | 60.7 |
| C. 28% UAN Carrier at 125 Pounds N/A; Control: 125 Pounds N/A | | | | | | | | |
| 0.02 | 43.7 | 43.0 | 133.7 | 176.0 | 35.7 | 37.3 | 56.3 | 81.0 |
| 0.04 | 35.3 | 43.0 | 112.7 | 176.0 | 32.7 | 37.3 | 58.3 | 81.0 |
| 0.06 | 45.0 | 43.0 | 160.0 | 176.0 | 30.8 | 37.3 | 57.7 | 81.0 |

EXAMPLE 5

The compositions were tested at rates of 0.025 and 0.25 pounds AI per acre on field corn planted in sandy loam. They were applied as a pre-plant soil incorporated treatment using either water or 28% UAN solution as carrier. The amount of 28% UAN solution was adjusted to furnish 75 pounds N per acre. Where no formulation is indicated, the active compounds were applied to soil as an acetone solution.

Growth responses were measured after six weeks. Plant height and green weight were measured as in Example 2. Root displacement was measured by carefully washing the soil from the portion of the plant below the soil surface, immersing the obtained roots in a graduated cylinder containing water and measuring the amount of water displaced. The results are set forth in Tables 8 and 9.

TABLE 8 - WATER CARRIER

| COMPOUND (FORMULATION) | Rate: 0.025 #AI/A HEIGHT (INCHES) | WEIGHT (GRAMS) | ROOT DISP. (ML) | Rate: 0.25 #AI/A HEIGHT (INCHES) | WEIGHT (GRAMS) | ROOT DISP. (ML) |
|---|---|---|---|---|---|---|
| 1 | *19.7 | **15.0 | 12.2 | 13.0 | 9.7 | *27.2 |
| 2 | 15.8 | *12.7 | *24.2 | 14.5 | 8.3 | 18.2 |
| 3 | 14.3 | 4.7 | 11.3 | 16.7 | 10.7 | 18.3 |
| 4 | *10.0 | 4.0 | 9.8 | 15.0 | 10.7 | 20.8 |
| 5 | 14.0 | 4.7 | 12.3 | *19.0 | 9.0 | 15.7 |
| 6 | ** 8.2 | 5.0 | 8.3 | 13.7 | **13.3 | *25.7 |
| 7 | 13.3 | 10.0 | 21.5 | *18.5 | 9.7 | 15.2 |
| 8 | *10.7 | 4.7 | 10.0 | 13.8 | *12.7 | 22.0 |
| 9 | 12.8 | 9.3 | 14.3 | 13.2 | *11.7 | 19.7 |
| 9(c) | 12.0 | 6.0 | 17.7 | 17.7 | *11.3 | 21.2 |
| 10 | ** 9.7 | 5.7 | 10.3 | 14.5 | 10.0 | 16.7 |
| 12 | 12.2 | 2.7 | 8.7 | 16.0 | 10.7 | 23.3 |
| 13 | 13.3 | 5.0 | 13.0 | 16.5 | **15.3 | 22.3 |
| 14 | 13.8 | 6.7 | 14.7 | 14.8 | 10.0 | 19.0 |
| 15 | ** 9.7 | 4.3 | 10.3 | 13.5 | 11.0 | *24.7 |
| 16 | 12.5 | 6.7 | 11.7 | 14.7 | 10.7 | 18.7 |
| 17 | 13.7 | 5.7 | 11.3 | 18.0 | *11.3 | 18.3 |
| 18 | *10.5 | 4.0 | 14.7 | 17.3 | *11.7 | *26.8 |

TABLE 8 - Continued

| COMPOUND (FORMULATION) | Rate: 0.025 #AI/A HEIGHT (INCHES) | WEIGHT (GRAMS) | ROOT DISP. (ML) | Rate: 0.25 #AI/A HEIGHT (INCHES) | WEIGHT (GRAMS) | ROOT DISP. (ML) |
|---|---|---|---|---|---|---|
| 19 | 12.7 | 8.3 | 16.8 | 16.2 | 9.3 | 19.0 |
| 20 | 15.5 | 6.5 | 18.5 | 17.5 | *12.0 | *25.8 |
| 21 | 12.8 | 6.0 | 17.3 | 17.0 | 11.0 | *24.7 |
| 22 | 15.3 | 5.7 | 16.0 | **19.3 | **13.0 | *26.3 |
| 23 | 12.7 | 5.0 | 14.7 | *18.3 | 10.3 | 22.0 |
| 24 | 13.3 | 4.7 | 16.0 | *18.3 | *12.0 | 24.0 |
| 25 | 16.0 | 5.0 | 14.8 | 16.3 | 10.7 | *25.3 |
| CONTROL (NO TREATMENT) | 14.9 | 6.0 | 14.3 | 14.9 | 6.0 | 14.3 |
| LSD .05 | ±3.88 | ±5.65 | ±8.97 | ±3.29 | ±5.14 | ±10.35 |
| .01 | ±5.15 | ±7.51 | ±11.92 | ±4.37 | ±6.83 | ±13.76 |

TABLE 9 - UAN CARRIER

| COMPOUND (FORMULATION) | Rate: 0.025 #AI/A HEIGHT (INCHES) | WEIGHT (GRAMS) | ROOT DISP. (ML) | Rate: 0.25 #AI/A HEIGHT (INCHES) | WEIGHT (GRAMS) | ROOT DISP. (ML) |
|---|---|---|---|---|---|---|
| 1 | 14.7 | *12.0 | 15.5 | 19.2 | **16.0 | 22.0 |
| 2 | 17.0 | *12.3 | 16.8 | 16.3 | 11.7 | 18.7 |
| 3 | 14.0 | 10.7 | 18.3 | *11.7 | 11.0 | 14.0 |
| 4 | *11.7 | *11.7 | 18.7 | *12.0 | 9.0 | 12.0 |
| 5 | 15.5 | **13.5 | *23.7 | *11.3 | 11.7 | 10.7 |
| 6 | 16.2 | *12.3 | 16.7 | 14.8 | **17.3 | **27.0 |
| 7 | 14.3 | 10.7 | 14.7 | 15.5 | **16.3 | 20.8 |
| 8 | 13.0 | **13.0 | 13.3 | 13.3 | 12.0 | 11.0 |
| 9 | 16.8 | 11.3 | 15.0 | 18.8 | *14.0 | 17.0 |
| 9(c) | 14.3 | 11.0 | 19.7 | 16.8 | 10.3 | 14.2 |
| 10 | *12.3 | *11.7 | 17.7 | 15.3 | *14.0 | 19.0 |
| 12 | 14.67 | **14.0 | 19.0 | 13.3 | 7.67 | 12.3 |
| 13 | 16.3 | **13.7 | 19.3 | 14.8 | **16.3 | 21.3 |
| 14 | 15.5 | *12.0 | 16.7 | 12.3 | *14.0 | 18.7 |
| 15 | 16.5 | 10.3 | 17.0 | 13.3 | 12.0 | 12.7 |
| 16 | 15.3 | *11.7 | 20.0 | 13.0 | 11.7 | 18.7 |
| 17 | 15.0 | *11.7 | 18.0 | 16.3 | 10.3 | 15.3 |
| 18 | 13.0 | 7.7 | 15.7 | 15.8 | 12.3 | 20.7 |
| 19 | 18.8 | **13.7 | 21.0 | 15.0 | 11.3 | *24.3 |
| 20 | 18.8 | **15.3 | **32.0 | 17.5 | *13.0 | *23.3 |
| 21 | 16.3 | 12.0 | 21.3 | 14.3 | 10.7 | 17.5 |
| 22 | 15.5 | **13.3 | **25.8 | 15.0 | 10.0 | 15.8 |
| 23 | 16.8 | *12.7 | 20.8 | 14.3 | 10.7 | 15.0 |
| 24 | 19.3 | *12.3 | 21.2 | 17.0 | **15.0 | 21.7 |
| 25 | 16.3 | *12.3 | **25.7 | 17.0 | *14.0 | **26.7 |
| CONTROL (75# N/A) | 16.125 | 6.4 | 13.6 | 16.125 | 6.4 | 13.6 |
| LSD .05 | ±3.54 | ±4.92 | ±9.08 | ±3.81 | ±6.03 | ±8.68 |
| .01 | ±4.70 | ±6.53 | ±12.06 | ±5.06 | ±8.02 | ±11.54 |

EXAMPLE 6

Ten compositions were evaluated in greenhouse tests at rates of .01, 0.10, and 0.50 pounds AI/A. All treatments were applied in acetone as a carrier because of their solubility. In some cases either crotonaldehyde or cinnamaldehyde was incorporated into the composition in an amount equal to the weight of active ingredient. The compositions were applied at a rate of 15 gallons of acetone per acre by a tractor-mounted sprayer applying them over the top of six ounce cups of clay loam soil. The treatments were mixed into each cup of soil by dumping the cup into a plastic bag, shaking it, and putting the soil back into individual cups. Two days after treatment, corn and cotton were planted. Planting depth was 0.5 inch. Each pot received three seeds of the crop designated for that pot. Six replications were utilized in this study.

After emergence, plant heights, ratings, and green weights were determined. Plant heights were obtained by simply measuring from the soil level to the top of the average height in cotton, and by the soil level to the top of the tallest leaf in corn. Visual ratings of color were obtained on corn simply by visually estimating the greenness of the plant. Fresh weights were obtained as a harvest after the study was completed simply by cutting the plants at the soil level and weighing them.

Very definite effects from the compositions were seen in both cotton and corn. In cotton there were very definite differences in terms of height and also in fresh weight, with some compounds showing decreased fresh weight and decreased height, while others were showed increased fresh weight and increased height. Overall, the lower rate, .01 pound/A, gave

the most activity whether in corn or cotton. In corn, there was a difference in color and also differences in fresh weight were observed. Results of the tests are set forth in Table 10.

TABLE 10

| COMPOUND | FORMULATION | RATE #AI/A | FIELD CORN PLANT HEIGHT(CM) | FIELD CORN PLANT WEIGHT(CM) | COTTON PLANT HEIGHT(CM) | COTTON PLANT WEIGHT(CM) |
|---|---|---|---|---|---|---|
| 10 | None | 0.01 | 20.875 | *2.500 | *6.283 | 1.350 |
| | | 0.10 | 19.042 | 2.192 | **6.825 | **1.500 |
| | | 0.50 | 19.792 | 1.983 | 5.592 | 1.275 |
| 10 | (Cinnamaldehyde) | 0.01 | *22.958 | **2.842 | 5.492 | 1.150 |
| | | 0.10 | 21.500 | 2.425 | **7.292 | **1.692 |
| | | 0.50 | 20.750 | 2.092 | *6.208 | *1.396 |
| 20 | None | 0.01 | 21.125 | 2.442 | 5.475 | 1.000 |
| | | 0.10 | 19.708 | 1.842 | 4.900 | 1.125 |
| | | 0.50 | *16.875 | 1.633 | 4.442 | 0.917 |
| 20 | (Cinnamaldehyde) | 0.01 | 21.083 | 2.475 | **6.500 | *1.392 |
| | | 0.10 | 20.500 | 2.292 | 4.325 | 1.067 |
| | | 0.50 | 17.833 | *1.550 | 4.242 | 0.908 |
| 20 | (Crotonaldehyde) | 0.01 | 20.917 | 2.325 | *6.058 | 1.342 |
| | | 0.10 | 21.708 | 2.217 | *6.292 | **1.600 |
| | | 0.50 | **23.125 | 2.325 | 4.200 | 1.033 |
| CONTROL (NO TREATMENT) | | | 19.433 | 2.025 | 5.042 | 1.104 |
| LSD .01 | | | ±3.328 | ±0.625 | ±1.287 | ±0.354 |
| .05 | | | ±2.518 | ±0.473 | ±0.974 | ±0.268 |

EXAMPLE 7

Compound 9 in formulation C and a water carrier was applied to emergent corn in clay loam using a $CO_2$ back pack sprayer. The corn was 12 to 16 inches tall at the time of application. Two rates were tested: 0.05 and 0.5 pound/A. Three replications were used. The test plots were three 40" by 25 feet rows. Yield was obtained by hand harvesting the center row from each test plot.

At a rate of 0.05, 118.11 bushels/acre were harvested which was 119% of the 98.84 bushels/acre for untreated control. At the 0.50 rate of application, 90.49 bushels were harvested per acre which was 92% of the control. The LSD at 0.05 was $\pm$34.46 while the 0.01 LSD was $\pm$47.21.

EXAMPLE 8

Compound 9 in formulation C was applied in a water carrier using a $CO_2$ back pack sprayer. 28 gallons of water per acre was applied. Four 30" by 25 feet rows were treated. The corn was just emerging from the clay loam soil when the compounds were applied. Three rates were tested: 0.05, 0.1 and 0.2 pounds/A. Three replications were used. Yield was obtained by harvesting 0.001 acre of each plot.

The results for rates of 0.05, 0.10 and 0.20 were 150.37, 181.27 and 161.58 bushels per acre respectively. The untreated control yielded 186.74 bushels per acre. The 0.05 and 0.01 LSD's were ±24.85 and ±33.59 respectively.

EXAMPLE 9

Compositions were applied using a $CO_2$ back pack sprayer. The compounds were diluted using acetone and were then added to water along with 1 to 2 drops of Triton X-100 emulsifier. 28 gallons of water was applied per acre. The compounds were applied prior to emergence to corn planted in clay loam. The plots were two 30 inch x 25 feet rows. Three replications were used. Two rates were applied: 0.025 and 0.25 pounds/A. Yield was obtained by hand harvesting 0.001 acre from each plot. The results are set forth in Table 11.

TABLE 11

| COMPOUND | 0.025 # AI/A YIELD BU/A | 0.25 # AI/A YIELD BU/A |
|---|---|---|
| 1 | 190.6 | 199.60 |
| 2 | 192.5 | 196.03 |
| 3 | 206.2 | 189.74 |
| 4 | *175.5 | 182.81 |
| 5 | 191.1 | 186.36 |
| 6 | 215.4 | 212.20 |
| 7 | 186.2 | 203.41 |
| 8 | 188.6 | 199.86 |
| 9 | 202.6 | 202.05 |
| 10 | 194.7 | 193.30 |
| 11 | 208.1 | 198.49 |
| 12 | 209.4 | 189.47 |
| 13 | 203.4 | 192.48 |
| 14 | 188.1 | 193.84 |
| 16 | **157.7 | 198.22 |
| 17 | 204.5 | 204.24 |
| 18 | 187.6 | 194.12 |
| 19 | *173.9 | 198.22 |
| 20 | 184.0 | 211.61 |
| 21 | 182.1 | 194.94 |
| 22 | 198.2 | 195.49 |
| 23 | 187.0 | 200.41 |
| 24 | 188.4 | 188.10 |
| 25 | *174.5 | 199.58 |
| CINNAMALDEHYDE | 195.7 | 178.26 |
| CROTONALDEHYDE | 203.7 | 194.94 |
| CONTROL (NO TREATMENT) | 217.6 | 190.56 |
| LSD .05 | ±41.48 | ±31.03 |
| .01 | ±55.19 | ±41.29 |

EXAMPLE 10

Compound 9 in formulation C was tested at rates of 0.013, 0.026 and 0.039 pounds AI per acre on sweet corn planted in fine sand. The composition was applied as pre-plant soil incorporated, pre-emergent, early post-emergent (corn 6-12 inches tall) and late post-emergent (corn 18-24 inches tall) treatments. The soil applied treatments were applied using 32% UAN solution as carrier and were adjusted to furnish 50 pounds N per acre. The post-emergent treatments were applied using water as carrier. The plots were two 36" by twenty-five feet rows. The sweet corn was allowed to mature and was hand-harvested. The results of this test are given in Table 12.

TABLE 12

| | Rate #AI/A | Yield LB/A |
|---|---|---|
| Pre-plant Incorporated | 0.013 | 9,641.28 |
| | 0.026 | 9,516.41 |
| | 0.039 | 10.707.05 |
| Control(50#N/A) | | 9,937.49 |
| LSD | .05 | $\pm$2397.7 |
| | .01 | $\pm$3212.32 |
| Pre-Emergent | 0.013 | 9,562.87 |
| | 0.026 | 9,679.03 |
| | 0.039 | 9,931.68 |
| Control(No Treatment) | | 9,313.13 |
| Control(50#N/A) | | 8,732.33 |
| LSD | .95 | $\pm$2092.99 |
| | .01 | $\pm$2804.09 |
| Early Post-Emergent | 0.013 | 10,126.25 |
| | 0.026 | 9,098.23 |
| | 0.039 | 9,410.24 |
| Control(No Treatment) | | 9,313.13 |
| LSD | .05 | $\pm$1895.47 |
| | .01 | $\pm$2539.46 |
| Late Post-Emergent | 0.013 | 9,321.84 |
| | 0.026 | *7,338.41 |
| | 0.039 | 8,044.08 |
| Control(No Treatment) | | 9,313.13 |
| LSD | .05 | $\pm$1765.4 |
| | .01 | $\pm$2362.2 |

EXAMPLE 11

Compound 9 in formulation C in a water carrier was tested at rates of 0.2 and 1.0 pounds AI per acre using sugar beets planted in clay loam as the test crop. The composition was applied after the crop plants had emerged and were in the 6-10 true leaf stage. The soil was mixed using a field cultivator 24 hours later. The test plots were three rows (30" spacing) by twenty-five feet long. The sugar beets were allowed to mature and were hand harvested from 0.001 acre. The results were as follows:

| | Rate #AI/A | Yield #Beets/A | Percent Sucrose | Yield:Pounds Sucrose/A |
|---|---|---|---|---|
| | 0.2 | 57,795.41 | 13.57 | **7,842.84 |
| | 1.0 | 48,456.14 | 13.59 | 6,585.19 |
| Control (No Treatment) | | 50,390.21 | 13.21 | 6,656.55 |
| LSD | .05 | ±7,433.6 | ±2.0420 | ±861.5 |
| | .01 | ±10,182.7 | ±2.7979 | ±1,180.0 |

EXAMPLE 12

Compound 9 in formulation C and a water carrier was tested at rates of 0.2 and 1.0 pounds AI per acre using cotton planted in clay loam as a test crop. The composition was applied after the cotton had been planted but before it had emerged from the soil. The test plots were three rows spaced 30" and twenty-five feet long. The cotton was allowed to mature and was hand harvested from 0.001 acre. The equivalent yield per acre was 1291.6 pounds or 111% of the untreated control from the plot treated with 0.2 pounds active ingredient/acre, and 1354.2 pounds or 116% of the control from the plot treated at a rate of 1.0.

Compounds of the invention were blended with equimolar amounts of phenols. These compositions were N-phenylpropylideneimine (13.3 grams) and p-nonylphenol (22 grams), designated Compound 26, N-phenylbenzylideneimine and p-nonylphenol, designated Compound 27, 4-nonylphenol and N-dodecylbenzylideneimine (Compound 28), 2-methylphenol and N-dodecylcinnamylideneimine (Compound 29), 4-nonylphenol and N-dodecylcinnamylideneimine (Compound 30) and 4-nonylphenol and N-phenylcinnamylideneimine.

In the examples, below, various formulations of these compositions were tested. These formulations are identified in Table 1.

TABLE 1

| Formulation | Dowanol EB Weight Percent | Pluronic P-104 Weight Percent | Active Ingredient Weight Percent | Other Ingredient Weight Percent |
|---|---|---|---|---|
| A | 38.05 | 57.58 | 4.38 | -- |
| B | 36.45% | 55.16 | 4.19 | 4.19 Cinnamaldehyde |
| C | 36.45 | 55.16 | 4.19 | 4.19 Crotonaldehyde |
| D | 36.45 | 55.16 | 4.19 | 4.19 Citronellal |
| E | 34.99% | 52.94 | 4.02 | 4.02 Cinnamaldehyde<br>4.02 Crotonaldehyde |
| F | 36.45% | 55.16 | 4.19 | 4.19 Anisaldehyde |
| G | 36.45 | 55.16 | 4.19 | 4.19 Salicylaldehyde |
| H | 36.45 | 55.16 | 4.19 | 4.19 Acetylacetone |

- 38 -

EXAMPLE 12

Compositions were formulated and greenhouse tested at a rate of 0.03 pounds active ingredient per acre on field corn and 0.015 pounds per acre on cotton. The compositions were applied both by incorporation in the upper 4" of sandy loam soil prior to planting and by application to the surface of the soil. Incorporation refers to incorporation of the experimental chemical into the soil followed by planting the seed immediately. Surface application was effected by applying the experimental chemical to the soil surface, watering and then planting the seed one week later. Ten inch high nursery pots were used in the test. The formulations were applied in a 28% Urea-Ammonium Nitrate solution (UAN) carrier. The amount of UAN solution was adjusted to furnish the equivalent of 100 pounds nitrate per acre for field corn and 50 pounds nitrogen per acre for cotton. Growth responses were measured after six weeks. Plant height was measured from the soil level to the top of the tallest leaf in corn and to the average height in cotton. Green weight was measured by weighing the portion of the plant above the soil level. The results are set forth in Tables 2-3.

TABLE 2 - CORN

| COMPOUND (FORMULATION) | | PRE-PLANT INCORPORATED HEIGHT (INCHES) | PRE-PLANT INCORPORATED WEIGHT (GRAMS) | SURFACE APPLICATION HEIGHT (INCHES) | SURFACE APPLICATION WEIGHT (GRAMS) |
|---|---|---|---|---|---|
| 26 | (A) | 36.6 (118) | 15.6 (91) | 41.0 (131) | 25.0 (136) |
| | (B) | 36.6 (118) | 45.0 (263) | 32.7 (105) | 18.3 (99) |
| | (C) | 16.5 (53) | 4.5 (26) | 33.5 (107) | 15.0 (82) |
| | (H) | 32.6 (105) | 17.6 (103) | 29.6 (95) | 15.0 (82) |
| 27 | (A) | 60.0 (194) | 44.6 (261) | 30.3 (97) | 47.6 (259) |
| | (B) | 34.6 (112) | 30.3 (177) | 40.0 (128) | 47.0 (255) |
| | (G) | 39.5 (127) | 23.5 (137) | 36.6 (117) | 17.3 (94) |
| | (H) | 54.0 (174) | 69.0 (404) | 23.0 (74) | 22.0 (120) |
| 28 | (A) | 30.0 (97) | 17.6 (103) | 31.0 (99) | 17.5 (95) |
| | (B) | 33.6 (108) | 28.3 (165) | 40.6 (130) | 41.6 (226) |
| | (D) | 24.5 (79) | 10.0 (58) | 24.5 (79) | 8.5 (46) |
| 29 | (A) | 29.3 (95) | 15.0 (88) | 25.5 (82) | 12.0 (65) |
| | (B) | 50.0 (161) | 57.3 (335) | 43.0 (130) | 41.5 (226) |
| | (D) | 29.0 (94) | 14.0 (82) | 28.3 (91) | 15.3 (83) |
| 30 | (A) | 32.5 (105) | 23.5 (137) | 39.5 (127) | 32.0 (174) |
| | (B) | 28.5 (92) | 13.5 (79) | 29.3 (94) | 15.3 (83) |
| | (D) | 31.0 (100) | 18.5 (108) | 32.3 (104) | 26.6 (145) |
| NO TREATMENT CONTROL | | 30.9 | 17.7 | 28.1 | 15.5 |
| (100# N/A) | | 31.0 | 17.1 | 31.2 | 18.4 |

TABLE 3 - COTTON

| COMPOUND (FORMULATION) | | PRE-PLANT INCORPORATED HEIGHT (INCHES) | PRE-PLANT INCORPORATED WEIGHT (GRAMS) | SURFACE APPLICATION HEIGHT (INCHES) | SURFACE APPLICATION WEIGHT (GRAMS) |
|---|---|---|---|---|---|
| 26 | (A) | 9.0 (109) | - | 10.67 (127) | - |
| | (B) | 7.0 (85) | - | 10.33 (123) | - |
| | (C) | 8.3 (101) | - | 7.33 (87) | - |
| | (H) | 8.5 (103) | - | 8.00 (95) | - |
| 27 | (A) | 10.5 (128) | - | 8.33 (99) | - |
| | (B) | 11.0 (134) | - | 11.50 (136) | - |
| | (G) | 10.7 (130) | - | 9.00 (107) | - |
| | (H) | 15.5 (189) | - | 7.33 (87) | - |
| 28 | (A) | 9.0 (109) | 4.7 (137) | 8.50 (101) | 4.00 (100) |
| | (B) | 9.5 (116) | 4.5 (131) | 9.67 (115) | 5.67 (142) |
| | (D) | 8.7 (106) | 4.7 (137) | 9.00 (107) | 4.50 (112) |
| 30 | (A) | 10.0 (122) | 4.5 (131) | 9.50 (113) | 4.00 (100) |
| | (B) | 9.0 (109) | 4.3 (125) | 9.00 (107) | 3.33 (83) |
| | (D) | 8.0 (97) | 3.7 (108) | 8.33 (99) | 3.33 (83) |
| NO TREATMENT CONTROL | | 8.105 | 3.450 | 7.73 | 3.03 |
| (50# N/A) | | 8.220 | 3.431 | 8.43 | 4.00 |

EXAMPLE 13

The compositions were formulated and tested at rates of 0.015 pounds per acre and 0.03 pounds per acre on field corn using water or 28% UAN as carrier. The amount of UAN solution was adjusted to furnish the equivalent of 50 pounds N per acre. The methods employed in Example 2 were used. Nine plants and controls were treated by each method.

Growth responses were measured after six weeks. Plant height and green weight were measured as in Example 2. The results are set forth in Tables 4 through 6.

TABLE 4

(WATER CARRIER / 0.015 POUNDS AI/A/ CONTROL: NO TREATMENT)

| COMPOUND (FORMULATION) | | PRE-PLANT INCORPORATED HEIGHT (INCHES) RESULT | CONTROL | PRE-PLANT INCORPORATED WEIGHT (GRAMS) RESULT | CONTROL | SURFACE APPLICATION HEIGHT (INCHES) RESULT | CONTROL | SURFACE APPLICATION WEIGHT (GRAMS) RESULT | CONTROL |
|---|---|---|---|---|---|---|---|---|---|
| 26 | (B) | 23.4 | 18.0 | 5.0 | 2.7 | 22.1 | 18.0 | 4.9 | 2.7 |
| 27 | (A) | 21.7 | 14.0 | 5.1 | 1.8 | 16.9 | 14.0 | 3.6 | 1.7 |
| | (B) | 22.1 | 14.0 | 4.6 | 1.3 | 15.4 | 14.0 | 2.2 | 1.3 |
| | (H) | 23.4 | 15.2 | 4.9 | 1.8 | 18.4 | 15.2 | 3.7 | 1.8 |
| 28 | (B) | 16.1 | 12.3 | 3.9 | 1.5 | 13.3 | 12.3 | 2.4 | 1.5 |
| 29 | (B) | 21.4 | 13.1 | 5.1 | 1.9 | 18.0 | 13.1 | 3.8 | 1.9 |

TABLE 5

(28% UAN CARRIER / 0.015 POUNDS AI/A/ CONTROL: 50 POUNDS N/A)

| COMPOUND (FORMULATION) | | PRE-PLANT INCORPORATED HEIGHT (INCHES) RESULT | PRE-PLANT INCORPORATED HEIGHT (INCHES) CONTROL | PRE-PLANT INCORPORATED WEIGHT (GRAMS) RESULT | PRE-PLANT INCORPORATED WEIGHT (GRAMS) CONTROL | SURFACE APPLICATION HEIGHT (INCHES) RESULT | SURFACE APPLICATION HEIGHT (INCHES) CONTROL | SURFACE APPLICATION WEIGHT (GRAMS) RESULT | SURFACE APPLICATION WEIGHT (GRAMS) CONTROL |
|---|---|---|---|---|---|---|---|---|---|
| 26 | (B) | 22.8 | 19.3 | 5.2 | 3.5 | 24.3 | 23.9 | 6.1 | 6.1 |
| 27 | (A) | 21.6 | 16.4 | 6.1 | 3.0 | 22.0 | 20.6 | 4.9 | 4.4 |
| | (B) | 21.0 | 17.7 | 3.7 | 2.6 | 20.6 | 21.8 | 4.0 | 4.4 |
| | (H) | 21.9 | 18.8 | 4.7 | 3.1 | 22.8 | 22.6 | 5.0 | 4.8 |
| 28 | (B) | 19.4 | 17.2 | 4.8 | 2.6 | 18.9 | 17.2 | 4.9 | 4.3 |
| 29 | (B) | 21.0 | 17.6 | 4.9 | 4.0 | 21.1 | 22.6 | 4.7 | 5.8 |

TABLE 6

(28% UAN CARRIER / 0.03 POUNDS AI/A/ CONTROL: 50 POUNDS N/A)

| COMPOUND (FORMULATION) | | PRE-PLANT INCORPORATED HEIGHT (INCHES) RESULT | CONTROL | PRE-PLANT INCORPORATED WEIGHT (GRAMS) RESULT | CONTROL | SURFACE APPLICATION HEIGHT (INCHES) RESULT | CONTROL | SURFACE APPLICATION WEIGHT (GRAMS) RESULT | CONTROL |
|---|---|---|---|---|---|---|---|---|---|
| 26 | (B) | 23.3 | 19.3 | 4.9 | 3.5 | 23.3 | 23.9 | 5.2 | 6.1 |
| 27 | (A) | 19.9 | 16.4 | 5.1 | 3.0 | 18.3 | 20.6 | 3.7 | 4.4 |
| | (B) | 20.8 | 17.7 | 3.7 | 2.6 | 19.8 | 21.8 | 3.4 | 4.4 |
| | (H) | 20.4 | 18.8 | 4.3 | 3.1 | 19.6 | 22.6 | 3.9 | 4.8 |
| 28 | (B) | 16.3 | 14.4 | 3.1 | 2.6 | 16.5 | 17.2 | 3.1 | 4.3 |
| 29 | (B) | 20.7 | 17.6 | 4.6 | 4.0 | 19.4 | 22.6 | 4.2 | 5.8 |

EXAMPLE 14

Compound 26 in formulation B and Compound 27 in formulation H were tested at rates of 0.02, 0.04, 0.06 pounds AI per acre using field corn and milo (grain sorghum) as test species. The compositions were applied as a pre-plant soil incorporated treatment using either water or 28% UAN solution as carrier. The amount of 28% UAN solution was adjusted to furnish either 75 pounds N per acre or 125 pounds N per acre. The soil was a sandy loam.

Growth responses were measured as in Example 3. The results are set forth in Table 7. The results are questionable in view of the wide disparity in control values.

TABLE 7

COMPOUND 26

| RATE #AI/A | FIELD CORN HEIGHT (INCHES) RESULT | CONTROL | FIELD CORN WEIGHT (GRAMS) RESULT | CONTROL | MILO HEIGHT (INCHES) RESULT | CONTROL | MILO WEIGHT (GRAMS) RESULT | CONTROL |
|---|---|---|---|---|---|---|---|---|
| A. Water Carrier; Control: No treatment | | | | | | | | |
| 0.02 | 19.3 | 18.7 | 33.0 | 24.7 | 11.2 | 16.7 | 8.0 | 23.7 |
| 0.04 | 19.2 | 18.7 | 32.0 | 24.7 | 17.3 | 16.7 | 21.0 | 23.7 |
| 0.06 | 20.8 | 18.7 | 30.0 | 24.7 | 13.5 | 16.7 | 11.3 | 23.7 |
| B. 28% UAN Carrier at 75 Pounds N/A; Control: 75 Pounds N/A | | | | | | | | |
| 0.02 | 45.5 | 46.8 | 148.3 | 157.7 | 31.8 | 43.2 | 55.3 | 72.0 |
| 0.04 | 44.7 | 46.8 | 152.3 | 157.7 | 37.3 | 43.2 | 54.3 | 72.0 |
| 0.06 | 49.3 | 46.8 | 153.7 | 157.7 | 35.7 | 43.2 | 50.7 | 72.0 |
| C. 28% UAN Carrier at 125 Pounds N/A; Control: 125 Pounds N/A | | | | | | | | |
| 0.02 | 44.3 | 46.8 | 150.3 | 173.7 | 39.5 | 33.5 | 62.0 | 57.0 |
| 0.04 | 46.5 | 46.8 | 162.7 | 173.7 | 32.2 | 33.5 | 50.3 | 57.0 |
| 0.06 | 46.7 | 46.8 | 153.3 | 173.7 | 37.8 | 33.5 | 64.3 | 57.0 |

TABLE 8

COMPOUND 27

| RATE #AI/A | FIELD CORN HEIGHT (INCHES) RESULT | CONTROL | FIELD CORN WEIGHT (GRAMS) RESULT | CONTROL | MILO HEIGHT (INCHES) RESULT | CONTROL | MILO WEIGHT (GRAMS) RESULT | CONTROL |
|---|---|---|---|---|---|---|---|---|
| A. Water Carrier; Control: No treatment | | | | | | | | |
| 0.02 | 25.3 | 19.8 | 50.3 | 29.0 | 14.2 | 13.0 | 14.3 | 13.0 |
| 0.04 | 33.8 | 19.8 | 81.7 | 29.0 | 16.3 | 13.0 | 28.0 | 13.0 |
| 0.06 | 32.8 | 19.8 | 76.0 | 29.0 | 21.3 | 13.0 | 30.3 | 13.0 |
| B. 28% UAN Carrier at 75 Pounds N/A; Control: 75 Pounds N/A | | | | | | | | |
| 0.02 | 57.0 | 50.6 | 175.7 | 137.0 | 44.8 | 33.7 | 70.0 | 51.3 |
| 0.04 | 56.0 | 50.6 | 189.0 | 137.0 | 31.3 | 33.7 | 47.5 | 51.3 |
| 0.06 | 56.0 | 50.6 | 173.0 | 137.0 | 36.2 | 33.7 | 54.7 | 51.3 |
| C. 28% UAN Carrier at 125 Pounds N/A; Control: 125 Pounds N/A | | | | | | | | |
| 0.02 | 56.3 | 55.8 | 200.3 | 176.3 | 27.0 | 43.3 | 46.0 | 73.3 |
| 0.04 | 53.7 | 55.8 | 176.3 | 176.3 | 35.2 | 43.3 | 44.6 | 73.3 |
| 0.06 | 56.2 | 55.8 | 189.3 | 176.3 | 26.3 | 43.3 | 46.3 | 73.3 |

EXAMPLE 15

The compositions were tested at rates of 0.025 and 0.25 pounds AI per acre on field corn planted in sandy loam. They were applied as a pre-plant soil incorporated treatment using either water or 28% UAN solution as carrier. The amount of 28% UAN solution was adjusted to furnish 75 pounds N per acre. Where no formulation is indicated, the active compounds were applied to soil as an acetone solution.

Growth responses were measured after six weeks. Plant height and green weight were measured as in Example 2. Root displacement was measured by carefully washing the soil from the portion of the plant below the soil surface, immersing the obtained roots in a graduated cylinder containing water and measuring the amount of water displaced. The results are set forth in Tables 8 and 9.

TABLE 9 - WATER CARRIER

| COMPOUND (FORMULATION) | Rate: 0.025 #AI/A HEIGHT (INCHES) | WEIGHT (GRAMS) | ROOT DISP. (ML) | Rate: 0.25 #AI/A HEIGHT (INCHES) | WEIGHT (GRAMS) | ROOT DISP. (ML) |
|---|---|---|---|---|---|---|
| 26 | 13.5 | *12.0 | 22.3 | **19.5 | *11.7 | **30.3 |
| 27 | 14.3 | 4.7 | 14.3 | *19.0 | 7.5 | 18.5 |
| CONTROL (NO TREATMENT) | 14.9 | 6.0 | 14.3 | 14.9 | 6.0 | 14.3 |
| LSD .05 | ±3.88 | ±5.66 | ±8.97 | ±3.29 | ±5.14 | ±10.35 |
| .01 | ±5.15 | ±7.51 | ±11.92 | ±4.37 | ±6.83 | ±13.76 |

TABLE 10 - UAN CARRIER

| COMPOUND (FORMULATION) | Rate: 0.025 #AI/A HEIGHT (INCHES) | WEIGHT (GRAMS) | ROOT DISP. (ML) | Rate: 0.25 #AI/A HEIGHT (INCHES) | WEIGHT (GRAMS) | ROOT DISP. (ML) |
|---|---|---|---|---|---|---|
| 26 | *20.17 | *12.3 | 19.3 | 17.5 | *13.67 | 19.0 |
| 27 | 17.7 | **13.0 | 17.7 | 17.5 | *13.7 | 17.7 |
| CONTROL (75# N/A | 16.125 | 6.4 | 13.6 | 16.125 | 6.4 | 13.6 |
| LSD .05 | ±3.54 | ±4.92 | ±9.08 | ±3.81 | ±6.04 | ±8.68 |
| .01 | ±4.70 | ±6.53 | ±12.06 | ±5.06 | ±8.02 | ±11.54 |

EXAMPLE 16

Five compositions were evaluated in greenhouse tests at rates of .01, 0.10, and 0.50 pounds AI/A. All treatments were applied in acetone as a carrier because of their solubility. In some cases either crotonaldehyde or cinnamaldehyde was incorporated into the composition in an amount equal to the weight of active ingredient. The compositions were applied at a rate of 15 gallons of acetone per acre by a tractor-mounted sprayer applying them over the top of six ounce cups of clay loam soil. The treatments were mixed into each cup of soil by dumping the cup into a plastic bag, shaking it, and putting the soil back into individual cups. Two days after treatment, corn and cotton were planted. Planting depth was 0.5 inch. Each pot received three seeds of the crop designated for that pot. Six replications were utilized in this study.

After emergence, plant heights, ratings, and green weights were determined. Plant heights were obtained by simply measuring from the soil level to the top of the average height in cotton, and by the soil level to the top of the tallest leaf in corn. Visual ratings of color were obtained on corn simply by visually estimating the greenness of the plant. Fresh weights were obtained as a harvest after the study was completed simply by cutting the plants at the soil level and weighing them.

Very definite effects from the compositions were seen in both cotton and corn. In cotton there were very definite differences in terms of height and also in fresh weight, with some compounds showing decreased fresh weight and decreased height, while others were showed increased fresh weight and increased height. Overall, the lower rate, .01 pound/A, gave

the most activity whether in corn or cotton. In corn, there was a difference in color and also differences in fresh weight were observed. Results of the tests are set forth in Table 10.

TABLE 11

| COMPOUND | FORMULATION | RATE #AI/A | FIELD CORN PLANT HEIGHT (CM) | FIELD CORN PLANT WEIGHT (CM) | COTTON PLANT HEIGHT (CM) | COTTON PLANT WEIGHT (CM) |
|---|---|---|---|---|---|---|
| 26 | None | 0.01 | 20.833 | 2.417 | *4.058 | 0.983 |
| | | 0.10 | 19.125 | 2.008 | 4.083 | 0.983 |
| | | 0.50 | 19.208 | 1.817 | **3.367 | 0.725 |
| 26 | (Cinnamaldehyde) | 0.01 | 21.208 | 2.433 | **6.383 | 0.908 |
| | | 0.10 | 18.792 | 1.892 | 5.292 | 1.392 |
| | | 0.50 | 18.458 | 1.767 | 4.233 | 1.275 |
| 26 | (Crotonaldehyde) | 0.01 | 22.125 | *2.729 | *6.117 | 1.317 |
| | | 0.10 | 22.167 | 2.467 | *6.133 | 1.408 |
| | | 0.50 | 21.458 | 2.240 | 4.533 | 0.933 |
| 27 | None | 0.01 | 21.625 | 2.375 | **6.575 | 1.275 |
| | | 0.10 | 19.667 | 2.117 | **6.958 | **1.650 |
| | | 0.50 | 18.667 | 2.233 | *6.042 | *1.433 |
| 27 | (Cinnamaldehyde) | 0.01 | 20.708 | 2.467 | **7.417 | 1.267 |
| | | 0.10 | 20.375 | 2.175 | **7.042 | **1.550 |
| | | 0.50 | 19.833 | 2.117 | 5.608 | 1.367 |
| CONTROL (NO TREATMENT) | | | 19.433 | 2.025 | 5.042 | 1.104 |
| LSD | .01 | | ±3.328 | ±0.625 | ±1.287 | ±0.354 |
| | .05 | | ±2.518 | ±0.473 | ±0.974 | ±0.268 |

EXAMPLE 17

Compound 26 in formulation B and Compound 27 in formulation H and a water carrier were applied to emergent corn in clay loam using a $CO_2$ back pack sprayer. The corn was 12 to 16 inches tall at the time of application. Two rates were tested: 0.05 and 0.5 pound/A. Three replications were used. The test plots were three x 40" by 25 feet row. Yield was obtained by hand harvesting the center row from each test plot.

The results are set forth in Table 12.

TABLE 12

FIELD CORN

| COMPOUND | FORMULATION | RATE #AI/A | YIELD BU/A |
|---|---|---|---|
| 26 | (B) | 0.05 | 94.59 |
| | | 0.50 | 91.32 |
| 27 | (H) | 0.05 | 97.87 |
| | | 0.50 | 90.77 |
| CONTROL (NO TREATMENT) | | | 98.84 |
| LSD | | .05 | ±34.46 |
| | | .01 | ±47.21 |

EXAMPLE 18

Compounds were formulated in a water carrier and applied using a $CO_2$ back pack sprayer. 28 gallons of water per acre was applied. Four 30" by 25 feet rows were treated. The corn was just emerging from the clay loam soil when the compounds were applied. Three rates were tested: 0.05, 0.1 and 0.2 pounds/A. Three replications were used. Yield was obtained by harvesting 0.001 acre of each plot.

The results are set forth in Table 13.

TABLE 13

FIELD CORN

| COMPOUND | FORMULATION | RATE #AI/A | YIELD BU/A |
|---|---|---|---|
| 26 | (B) | 0.05 | 162.40 |
| | | 0.10 | 163.78 |
| | | 0.20 | 168.15 |
| 27 | (H) | 0.05 | 177.99 |
| | | 0.10 | 182.64 |
| | | 0.20 | 175.53 |
| CONTROL (NO TREATMENT) | | | 186.74 |
| LSD | | .05 | ±24.85 |
| | | .01 | ±33.59 |

EXAMPLE 19

Compounds were formulated and tested at rates of 0.013, 0.026 and 0.039 pounds AI per acre on sweet corn planted in fine sand. The compositions were applied as pre-plant soil incorporated, pre-emergent, early post-emergent (corn 6-12 inches tall) and late post-emergent (corn 18-24 inches tall) treatments. The soil applied treatments employed 32% UAN solution as carrier and were adjusted to furnish 50 pounds N per acre. The post-emergent treatments were applied using water as carrier. The plots were two 36" by twenty-five feet rows. The sweet corn was allowed to mature and was hand-harvested. The results of this test are given in Table 14.

TABLE 14

| | Rate #AI/A | Compound 26(B) Yield LB/A | Compound 27(G) Yield LB/A |
|---|---|---|---|
| Pre-plant Incorporated | 0.013 | 9,661.61 | 9,902.63 |
| | 0.026 | 11,014.87 | 9,670.32 |
| | 0.039 | 10,678.01 | 9,400.25 |
| Control (50# N/A) | | 9,937.49 | |
| LSD | .05 | +2397.7 | |
| | .01 | ±3212.32 | |
| Pre-Emergent | 0.013 | 10,309.20 | 10,561.85 |
| | 0.026 | 10,309.20 | *11,549.21 |
| | 0.039 | 9,467.04 | 7,803.05 |
| Control (No Treatment) | | 9,313.13 | |
| Control (50# N/A) | | 8,732.33 | |
| LSD | .05 | ±2092.99 | |
| | .01 | ±2804.09 | |
| Early Post-Emergent | 0.013 | 8,218.32 | 8,935.61 |
| | 0.026 | 7,948.25 | 9,060.48 |
| | 0.039 | 9,226.01 | 8,935.61 |
| Control (No Treatment) | | 9,313.13 | |
| LSD | .05 | +1895.47 | |
| | .01 | ±2539.46 | |
| Late Post-Emergent | 0.013 | 8,285.11 | 8,674.25 |
| | 0.026 | 8,982.07 | 9,031.44 |
| | 0.039 | *7,434.24 | 7,927.92 |
| Control (No Treatment) | | 9,313.13 | |
| LSD | .05 | ±1765.4 | |
| | .01 | ±2362.2 | |

EXAMPLE 20

Compound 26 in formulation B using a water carrier were tested at rates of 0.2 and 1.0 pounds AI per acre using sugar beets planted in clay loam as the test crop. The compositions were applied after the crop plants had emerged and were in the 6-10 true leaf stage. The soil was mixed using a field cultivator 24 hours later. The test plots were three rows (30" spacing) by twenty-five feet long. The sugar beets were allowed to mature and were hand harvested from 0.001 acre. The results were as follows:

| Compound Formulation | Rate #AI/A | Yield #Beets/A | Percent Sucrose | Yield:Pounds Sucrose/A |
|---|---|---|---|---|
| 26(B) | 0.2 | 52,272.00 | 13.68 | 7,150.81 |
| | 1.0 | 45,703.15 | 13.17 | 6,019.10 |
| 27(H) | 0.2 | **62,290.80 | 13.65 | **8,502.69 |
| | 1.0 | 54,885.60 | 12.79 | 7,019.87 |
| Control (No Treatment) | | 50,390.21 | 13.21 | 6,656.55 |
| LSD | .05 | ±7,433.6 | ±2.0420 | ±861.5 |
| | .01 | ±10,182.7 | ±2,7979 | ±1,180.0 |

EXAMPLE 21

Compounds were formulated in a water carrier and tested at rates of 0.2 and 1.0 pounds AI per acre using cotton planted in clay loam as a test crop. The compositions were applied after the cotton had been planted and before it had emerged from the soil. The test plots were three rows spaced 30" and twenty-five feet long. The cotton was allowed to mature and was hand harvested from 0.001 acre. The results were as follows:

| Compound Formulation | Rate #AI/A | Yield LB/A |
|---|---|---|
| 26(B) | 0.2<br>1.0 | 1875.0<br>1333.3 |
| 27(H) | 0.2<br>1.0 | 1625.0<br>1160.7 |
| Control (No Treatment) | | 1166.7 |
| LSD | .05 | ±778.91 |
| | .01 | ±1066.97 |

WE CLAIM:

1. A plant growth regulating composition comprising:
(a) an active compound of the formula

$$R - CH = N - R'$$

wherein R is selected from the group consisting of phenyl, phenylethenyl and $C_1$-$C_{12}$ alkyl and R' is selected from the group consisting of phenyl and $C_1$-$C_{12}$ alkyl; and
(b) an inert carrier.

2. The composition of claim 1 wherein the active compound is N-dodecylbenzylideneimine, N-phenylbenzylideneimine, N-t-butylcinnamylideneimine or N-phenylpropylideneimine.

3. The composition of claim 1 wherein the carrier is water and can also comprise an emulsifier and a solvent for the active compound.

4. A method of regulating the growth of a plant selected from the group consisting of corn, milo, oil, root, and fiber crops which comprises treating the plant with an effective amount of an active compound of the formula R - CH = N - R' wherein R is selected from the group consisting of phenyl, phenylethenyl and $C_1$-$C_{12}$ alkyl and R' is selected from the group consisting of phenyl and $C_1$-$C_{12}$ alkyl.

5. The method of claim 4 wherein the compound is applied to field corn at a rate of 0.01 to 0.25 pounds per acre.

6. The method of claims 4 or 5 wherein the compound is selected from the group consisting of N-dodecylbenzylideneimine, N-phenylbenzylideneimine and N-phenylpropylideneimine.

7. The method of claim 4 wherein the compound is applied to sweet corn at a rate of 0.01 to 0.1 pounds per acre, applied to cotton at a rate of 0.01 to 0.1 pounds per acre or to sugar beets at a rate of 0.01 to 0.5 pounds per acre.

8. The method of claim 7 wherein the compound is N-dodecylbenzylideneimine.

9. The method of claims 4 to 8 wherein the compound is applied to the soil prior to emergence of the plant being treated and optionally the planting is effected while temperatures are relatively cold.

10. The method of claims 4 to 9 wherein planting is effected in sandy soil.

European Patent Office

# EUROPEAN SEARCH REPORT

0066872 Application number

EP 82 10 4961

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DD-A- 122 915 (S. HUNECK et al.)<br>* claims * | 1-6 | A 01 N 35/10 |
| A | US-A-4 226 615 (G.H. ALT)<br>* column 5, lines 20-33; column 6, lines 6-50; claim 9 * | 1,3-5, 7,9 | |
| A | US-A-3 856 504 (T.K. DICKSON)<br>* the whole document * | 1,3-5, 9 | |
| A | US-A-3 992 191 (J.J. D'AMICO)<br>* column 1, lines 37-56; column 3, lines 9-27; claim 12 * | 1,3-5, 9 | |
| A | CHEMICAL ABSTRACTS, vol.80, no.25, June 24, 1974, page 401, abstract no.145634w, Columbus, Ohio (US)<br>I.F. VLADIMIRTSEV et al.: "Synthesis and biological activity of several azomethines" & Fiziol. Aktiv. Veshchestva, 1973, 5, 80-83 * the whole abstract * | 1 | TECHNICAL FIELDS SEARCHED (Int. Cl. 3)<br>A 01 N |

The present search report has been drawn up for all claims

| Place of search | Date of completion of the search | Examiner |
|---|---|---|
| THE HAGUE | 09-09-1982 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document